# EUROPEAN PATENT SPECIFICATION

(11) **EP 2 234 825 B1**
(45) Date of publication and mention of the grant of the patent: **15.06.2011**
(21) Application number: 07857870.5
(22) Date of filing: 19.12.2007
(51) Int. Cl.: B60C 23/04

(54) **DEVICE FOR RECEIVING SIGNALS FROM SENSORS ASSOCIATED WITH VEHICLE'S COMPONENTS, PARTICULARLY TIRES, AND SYSTEM COMPRISING THE SAME**
VORRICHTUNG ZUM EMPFANGEN VON SIGNALEN VON FAHRZEUGKOMPONENTEN, INSBESONDERE REIFEN, ZUGEORDNETEN SENSOREN, UND SYSTEM DAMIT
DISPOSITIF POUR RECEVOIR DES SIGNAUX PROVENANT DE CAPTEURS ASSOCIÉS À DES COMPOSANTS DU VÉHICULE, EN PARTICULIER DES PNEUS, ET SYSTÈME LE COMPRENANT

(43) Date of publication of application: 06.10.2010
(73) Proprietor: PIRELLI TYRE S.p.A., 20126 Milano (IT)
(72) Inventor: AUDISIO, Giorgio, I-20126 Milano (IT); MANCOSU, Federico, I-20126 Milano (IT); MARIANI, Fabio, I-20126 Milano (IT)
(74) Representative: Maccalli, Marco
(86) International application number: PCT/EP2007/064249
(87) International publication number: WO 2009/080097

(56) References cited:
- JP-A- 2007 237 781
- US-A- 6 087 930

## Description

### Background of the invention

The present invention generally relates to the field of automotive, and particularly to electronic systems for monitoring the operating conditions of various types of vehicles' components, in particular of vehicles' tires, generally known as Tire Monitoring Systems (TMSs), such as for example systems for monitoring the tires' pressure (Tire Pressure Monitoring Systems or TPMSs). More specifically, the present invention relates to a device for receiving signals from sensors associated with a vehicle's components, and to a system comprising such device.

### Description of the related art

In the automotive field, systems for monitoring the operating conditions of various types of vehicles' components are known.

In particular, systems for monitoring the operating conditions of vehicles' tires (TMSs), like TPMSs which allow monitoring the pressure of the vehicles' fires, are expected to gain popularity, because they contribute to increasing the active and passive safety.

TPMSs are electronic systems designed to monitor the operating conditions, particularly the pressure and other operating parameters of vehicles' tires.

Generally, a TPMS comprises one or more sensor units, intended to be operatively associated with one or more tires of a vehicle (being for example placed within the tire, or on the inflating valve thereof), which are adapted to measure tire operating parameters, basically the tire pressure; some sensors may also be adapted to measure the tire's temperature, and more sophisticated TMSs exploit sensors units capable of measuring other parameters, like the number of revolutions of the tire, the vertical load, the actual friction, etc..

The sensor units transmit, typically by means of wireless Radio Frequency (RF) transmission, data relating to the measured tire parameters values to a receiver unit, intended to be placed inside the vehicle cabin. The receiver unit is capable of receiving the data transmitted by the sensor units, and of processing the received data to, *e.g*., display relevant indications to the vehicle's driver, and particularly to issue alarms when, for example, the pressure or the temperature of one or more tires is out of a predetermined safety range.

WO 2005/116603 discloses a universal receiver (OTR) device which functions within a vehicle in the 'under-the-hood' (UTH) environment such that various types of tire pressure management system (TPMS) device, located within, upon or near a vehicle's tires can transmit tire information, such as the transmitter identification number (TIN), the tire unique identifier (TUID), the vehicle identification number (VIN), tire pressure, tire temperature, tire rotation, and other tire relevant data, to the OTR for further processing regardless of frequency, data transfer speed, or data format of the TPMS device. The OTR device in sequence: identifies the TPMS device, receives the tire information from the TPMS device, and processes the tire information into date records for efficient and optimized transmission of such data records for future analysis both within and off a vehicle. The OTR also interfaces with various types of telematics devices, regardless of the type of transmission or protocol used, by identifying the type of telematics device. The OTR also stores or retrieves information related to various telematics and TPMS devices in order to identify these devices. For example, an automotive manufacturer, dealership, or tire distributor would be able to select various manufacturers' TPMS and telematics devices for installation within the vehicle and with the OTR collect previously captured TPMS data for further analysis.

In US 2006/087419 a tire safety monitoring GPS display device is disclosed that includes a contact surface of a sensor joined to a tire steel ring by means of a circular fitting fixing agent, and the sensor is fixed onto the tire steel ring hereof. When the sensor circuit interior of the sensor detects internal status of a tire, the transmitting circuit transmits data to an aerial, and further transmits to a main receiver, whereupon status regarding interior of the tire is displayed on a screen of the main receiver. If an anomaly occurs, a communications module transmits a signal to the GPS receiver, at which time displaying on a monitor a car repair workshop at a closest distance from vehicle. Furthermore, if unusual movement in position of the vehicle occurs, the sensor transmits data to the GPS receiver thereby notifying location of the vehicle to a mobile communications device used by a user.

In JP 2007237781 an inexpensive tire air pressure monitoring system is disclosed. The system is provided with sensor units provided in each of the tires to measure at least tire air pressure, radio terminals provided corresponding to positions of the sensor units to perform radio communication with each of the corresponding sensor units, and a monitoring unit for transmitting a command signal to instruct the sensor units to transmit measuring signals including measured values of tire air pressure via the radio terminals and monitoring tire air pressure based on the measuring signals received from the sensor units via the radio terminals. The system is provided with a battery line connected to the monitoring unit and the radio terminals and battery line communication means (a communication equipment master station and a battery line communication circuit) for making the monitoring unit communicate with the radio terminals via the battery line.

US 6,087,930 discloses an active integrated circuit transponder with on-board power supply is mounted in or on a vehicle tire. A pressure sensor, a temperature sensor and a tire rotation sensor are mounted on a substrate along with the integrated circuit transponder chip, the power supply and an antenna. Upon receiving an interrogation signal from a remote source, the transponder activates the sensors to sense tire pressure and temperature and transmits an encoded radio frequency signal to the remote source containing serial, encoded tire identification, tire position on the vehicle, current tire pressure, current tire temperature and accumulated tire revolutions, as well as maximum and/or minimum tire and temperature pressure values encountered over a predetermined time period and other information specific to the tire.

### Summary of the invention

The Applicant observed that the commercial success of TMSs, and more generally monitoring systems of any kind of vehicles' components, that are sold as after-market vehicles' accessories, to be mounted on vehicles that do not include these monitoring systems as a part of the standard original vehicles' equipment, and/or are not integrated in the vehicle at the manufacturing stage, is significantly undermined by problems related to the monitoring systems installation.

Mounting an after-market vehicles' component monitoring system on a vehicle may be complicated, and generally poses problems.

In particular, the receiver unit of a TMS needs to be connected to a power supply line of the vehicle's electric system. Although taking the power supply from the cigarette-lighter socket, or from a power outlet generally provided for in the vehicle's cabin, may seem a straightforward solution, it is not satisfactory, because in this way these accessories could not be used for other purposes. Thus, it is almost always necessary to manipulate the vehicle's electric system. This operation is often not easy, so that the installation of the TMS has to be entrusted to technically-qualified people. However, even in this case problems may arise from the viewpoint of the warranty offered by the manufacturer on the vehicle, which may condition the persistence of the warranty to the fact that any intervention on the vehicle is entrusted to affiliate service centers.

Also, an after-market TMS receiver unit is necessarily designed as a stand-alone unit, with all the information processing resources and man/machine interfaces (audio-visual indicators, display devices, buttons or keyboards) necessary for its operation; indeed, it is practically impossible to take advantage of the already existing vehicle's equipment (normally available on the vehicle's dashboard), because the receiver unit cannot interface with any existing vehicle's instruments.

Difficulties often arise also in connection with the placement of the receiver unit within the vehicle, e.g. on the dashboard; problems of available space limit the number of possible locations for the receiver unit placement, and the final result is generally scarcely satisfactory even from the aesthetic viewpoint, because the receiver unit is perceived by people as a "foreign body" not integrated with the rest of the vehicle's equipment.

The Applicant has tackled the problem of providing a vehicles' components monitoring system, particularly but not limitatively a TMS that, even if sold as an after-market accessory to be installed on already circulating vehicles, is less affected by the problems outlined in the foregoing.

The Applicant has observed that modem vehicles are often provided with standard interfaces that allow an easy and reliable connectivity of various kinds of peripheral consumer electronics devices (like for example mobile phones, MP3 players, GPS navigation tools, USB storage devices - "pen drives") with a vehicle's data processing system, having input/output interfaces, which is embedded in the vehicle at the manufacturing stage and interacts with man/machine interfaces like a display, buttons, the loudspeakers of the vehicle's Hi-Fi radio-CD system. The vehicle's data processing system is capable of acting as a host for such peripheral devices when the latter are connected thereto through the standard interfaces; for example, the vehicle's display may be used by an external navigation tool to display the navigation information-to the driver, or an MP3 player may exploit the vehicle stereo system to play music or MP3 audio files may be downloaded from the MP3 player to the vehicle's data processing system for being played directly by the vehicle's Hi-Fi system.

The Applicant has found that the data processing system embedded in a vehicle by the vehicle manufacturer, thanks to the capability it offers of interfacing to peripheral devices through standard interfaces, can be exploited as a host data processing system for a vehicles' components monitoring system, like a TMS or a TPMS, so as to perform computing-intensive functions like processing the data transmitted by the sensors associated with the vehicle's components, for example tires' sensors, and the audio/visual display devices already integrated in the vehicle's accessory equipment can be advantageously exploited for displaying relevant indications about the vehicle's components operating conditions to the vehicle's driver.

The Applicant has also found that a standard interface made available by a vehicle's data processing system could be advantageously exploited for connecting a wireless receiver being able of performing substantially only the reception of the signals coming from the sensors of the monitoring system, leaving complex calculations and/or displaying functions to the vehicle's data processing system.

According to an aspect of the present invention, a device is provided comprising:
- a wireless receiver unit adapted to receive signals from at least one sensor mounted on a vehicle, wherein the signals received from the at least one sensor carry data related to operating parameters of at least one vehicle's component, detected by the at least one sensor;
- an interface adapted to the coupling of the device to a peripherals connection port of a vehicle's data processing system integrated in the vehicle, said peripherals connection port being accessible to users within the vehicle's cab for the connection of peripheral type electronic devices;
and wherein the device, when coupled to the peripherals connection port of the vehicle's data processing system, is operable to transfer thereto the data related to vehicle's operating parameters detected by the at least one sensor and to enable the vehicle's data processing system to processing the transferred data for the interpretation of the operating parameters.

Preferably, the device may comprise a power supply unit adapted to exploit a power supply provided by the vehicle's data processing system through said connection port thereof for generating a power supply for the operation of the device. This allows avoiding complex connections to the vehicle's electric system.

The device comprises a repository of at least one software package adapted to be installed on and executed by the vehicle's data processing system for said processing of the data related to vehicle's operating parameters detected by the at least one sensor, and the device may be adapted to upload said at least one software package to the vehicle's data processing system when coupled to the peripheral's connection port thereof. A facilitated and user-friendly procedure can thus be used for enabling the vehicle's data processing system to perform the processing of data detected by the sensors.

Said repository may be adapted to store a library of software packages adapted to be installed on and executed by the vehicle's data processing system for said processing of the data related to vehicle's operating parameters detected by the at least one sensor, each software package of said library corresponding to a respective type of sensor.

The device may include a processing unit adapted to identify in said library a software package corresponding to a specific type of sensor mounted on the vehicle, and to upload to the vehicle's data processing system the identified software package. This simplified procedure also facilitates the user.

The device may include a processing unit adapted to download said at least one software package from a software package storage and to store it in said repository.

Said software package storage may include a memory card, and the device may comprise a memory card connection interface adapted to the plugging of the memory card wherein said at least one software package to be downloaded is stored. The memory card could be sold with the at least one software package already stored therein, or the at least one software package could be downloaded on the memory card from a suitable network connection (e.g. from the Internet).

The processing unit of the device may be adapted to download said at least one software package from said software package storage by connection of said interface to a peripheral connection port of the software package storage. This procedure also facilitates the user.

The device may further comprise a connection interface having a peripherals connection port replicating the peripherals connection port of the vehicle's data processing system, and the device, when coupled to the peripherals connection port of the vehicle's data processing system, may be adapted to operate as a bridge between a peripheral device connected to said connection port of the connection interface and the vehicle's data processing system. This enables a user to connect and use another peripheral device even in presence of the device of the invention.

Said interface may include a USB interface or a Firewire interface adapted to the coupling of the device to a USB port or a Firewire port of the vehicle's data processing system.

Said at least one sensor may in particular include a tire's operating parameters sensor associated with at least one of the vehicle's tires. Said data related to vehicle's operating parameters detected by the at least one sensor may include one or more among a tire's inflating pressure, a tire's temperature, a tire's number of revolutions, a tire's friction coefficient, exerted forces at a tire-road interface, a tire's contact patch area length, a tire's slip angle, fire's aquaplaning conditions, road conditions and tire's tread band wear.

According to another aspect of the present invention, a vehicle's components operating conditions monitoring system is provided comprising:
- at least one sensor unit adapted to be associated with a vehicle's component, the at least one sensor unit comprising at least one sensor adapted to detect vehicle's component operating parameters, and a wireless transmitter adapted to wirelessly transmit signals carrying data related to the vehicle's component operating parameters detected by the at least one sensor;
- a wireless receiver unit according to the first aspect of the invention adapted to receive said signals from the at least one sensor unit.

### Brief description of the drawings

These and further features and advantages of the present invention will be best understood by reading the following detailed description of some embodiments thereof, provided merely by way of non-limitative example, description that will be conducted making reference to the annexed drawings, wherein:
**Figure 1** schematically shows an overview of a TMS according to an embodiment of the present invention;
**Figure 2** schematically shows, in terms of functional blocks, the main components of a receiver unit of the TMS of **Figure 1**, according to an embodiment of the present invention;
**Figure 3** is a simplified action flow showing the operation of the receiver unit according to an embodiment of the present invention; and
**Figure 4** pictorially shows a possible set-up for the downloading of software packages to the receiver unit.

### Detailed description of some embodiments of the invention

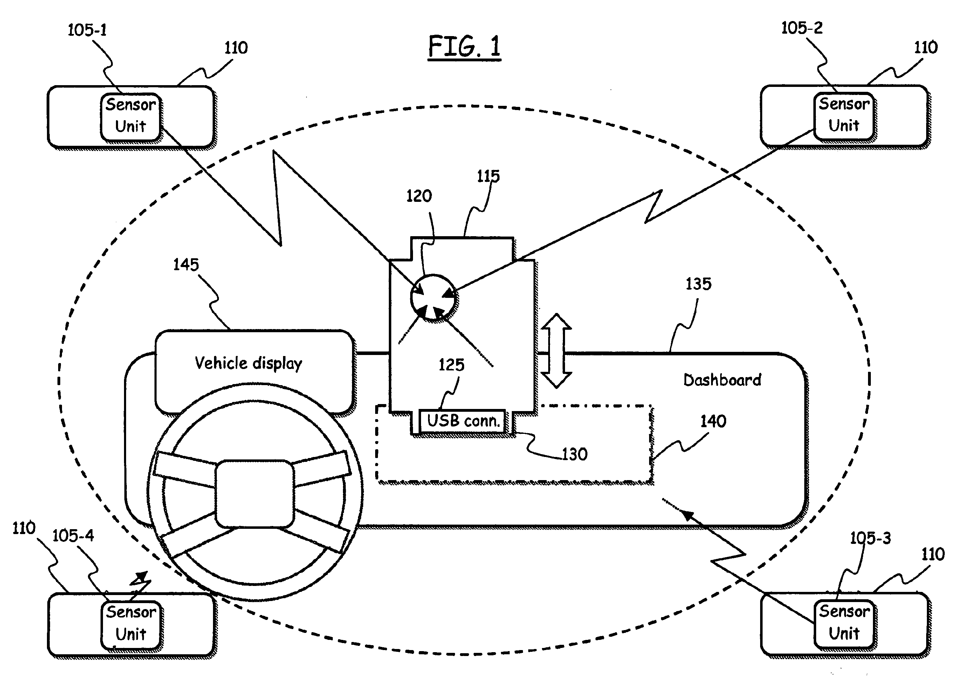

Making reference to **Figure 1**, an overview of a TMS, particularly a TPMS according to an embodiment of the present invention is pictorially shown. The TPMS is intended to be mounted on a vehicle, like for example a car, and includes one or more sensor units, for example four sensor units **105-1, 105-2, 105-3** and **105-4**, each one adapted to be operatively associated with a respective vehicle tire **110**. The sensor units **105-1, 105-2, 105-3** and **105-4** may include sensors adapted to measure one or more tire operating parameters, like for example one or more parameters among the tire pressure, the tire temperature, the number of revolutions of the tire, the tire friction coefficient, exerted forces at tire-road interface, contact patch area length, slip angle, aquaplaning status, road conditions (*e.g*. dry, wet, presence of ice, presence of snow, etc.) and tire's tread band wear. The sensor units **105-1, 105-2, 105-3** and **105-4** may for example be adapted to be placed inside a tire, or to be coupled to the tire inflating valve or the cap thereof or they may even be embedded in the tire material.

It is pointed out that the number of sensor units, and their nature, particularly the type and number of operating parameters that the sensors are capable of measuring, are not limitative for the present invention.

Each sensor unit **105-1,105-2,105-3** and **105-4** includes a wireless transmitter, particularly an RF transmitter, adapted to wirelessly transmit signals containing data related to the values of the tire operating parameters measured by the respective sensor(s), for example, the sensor units may transmit at 433 MHz, which is one of the standard frequencies assigned to transmissions for Industrial, Scientific and Medical (ISM) purposes by Short-Range Devices (SRD) like TPMSs. The sensor units **105-1, 105-2, 105-3** and **105-4** may also include a wireless RF receiver (i.e., they include an RF transceiver), for wirelessly receiving signals carrying data useful for the sensor units' settings and configuration parameters.

Among the data carried by the signals that the generic sensor unit may transmit there may also be a unique identifier code of the tire, and/or an indication of which of the vehicle's tires the transmitted data relate to (a functionality referred to as "auto-location").

The detailed structure of the generic sensor unit **105-1, 105-2, 105-3** and **105-4** is not shown nor will be described in further detail, being *per* se known and not essential for the understanding of, nor limitative for the present invention.

The TPMS comprises a receiver unit **115** according to an embodiment of the invention, comprising a wireless receiver **120**, particularly an RF receiver, adapted to receive the signals transmitted by the sensor units **105-1,105-2,105-3** and **105-4**. The wireless receiver **120** may be a wireless transceiver, and be adapted to transmit to the sensor units **105-1, 105-2, 105-3** and **105-4** signals the data useful for the sensor units' settings and configuration parameters.

The detailed structure of the receiver unit **115** according to an embodiment of the present invention will be described subsequently; the receiver unit **115** comprises at least limited data processing resources, and has a standard-type connector **125** adapted to enable the (removable) connection of the receiver unit **115** to a standard-type connection socket **130** provided for in the vehicle's accessory equipment, for example located on the vehicle's dashboard **135**, for the connection of consumer electronic peripheral devices.

As mentioned before, modern vehicles are now often provided with standard interfaces that allow an easy and reliable connectivity of various kinds of consumer electronics peripheral devices (like for example mobile phones, MP3 players, GPS navigation tools, USB storage devices - "pen drives") with a vehicle's data processing system **140**, which is embedded in the vehicle at the manufacturing stage and interacts with man/machine interfaces like a display device **145**, buttons, the loudspeakers of the vehicle's stereo radio-CD system. The vehicle's data processing system **140** acts as a host for such peripheral devices when the latter are connected thereto through the standard interfaces; for example, the vehicle's display **145** may be used by an external navigation tool to display the navigation information to the driver, or an MP3 player may exploit the vehicle stereo system to play music or MP3 audio files may be downloaded from the MP3 player to the vehicle's data processing system **140** for being played directly by the vehicle's stereo system.

These kinds of vehicle's data processing systems are often based on standard, open operating systems, like for example Microsoft's Windows Mobile for Automotive, which allow the installation and execution of software applications for specific, custom purposes, just like a normal personal computer.

The connector **125** of the receiver unit **115** may in particular be a USB (Universal Serial Bus) connector, preferably (albeit not limitatively) a USB-2.0 connector, adapted to connected to a corresponding USB connection socket **130** on the vehicle's dashboard **135**.

An advantage of the USB is that a USB host may supply power to a USB peripheral device, which thus does not need to have an autonomous power source. In particular, using a USB connection, the receiver unit **115** may receive the power necessary for its operation from the vehicle's data processing system **140**, without the necessity of equipping the receiver unit **115** with an internal battery, nor of connecting the receiver unit **115** to the vehicle's power supply (vehicle's battery). Other types of standard connections suitable to supply power to a peripheral device exist, such as for example the Firewire interface (defined in the IEEE standardization documents **1394** and **1394b**)

However, it is pointed out that although the use of a standard connection capable of supplying power to a peripheral device attached thereto may be regarded as preferential, it is not to be intended as limitative to the present invention, which may in general be practiced exploiting any kind of standard connection known or available now or in the future that will be provided on the vehicles, either wired or wireless, either capable of supplying power to peripheral devices or not.

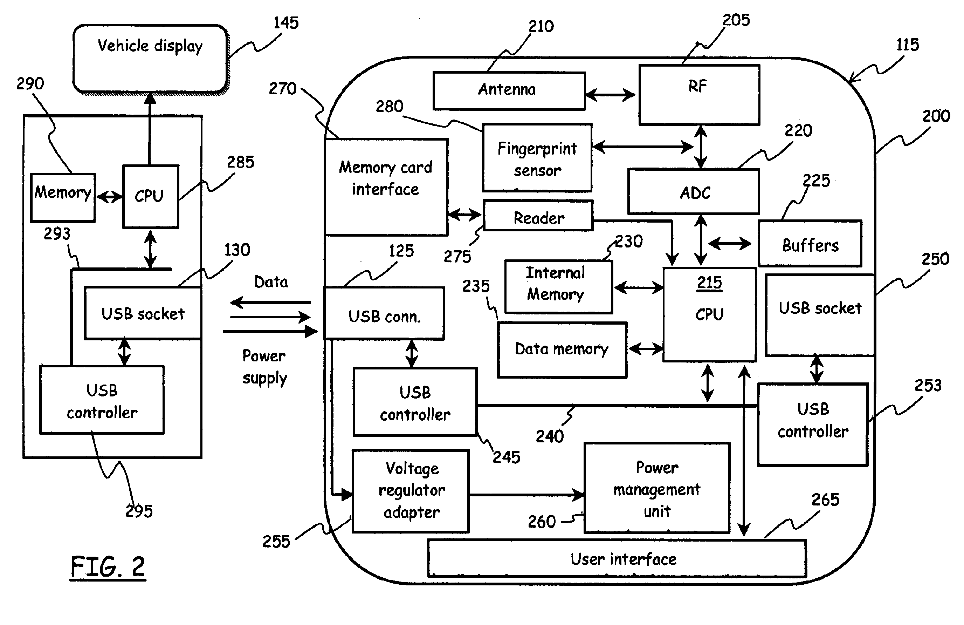

Referring now to **Figure 2**, a more detailed scheme of a receiving unit **115** according to an embodiment of the present invention is shown, in terms of some of its functional blocks.

The receiving unit **115** comprises, within a casing **200**, an RF section, schematically depicted as a block **205**, which includes the wireless receiver or transceiver **120** shown in Figure 1. In particular, the RF section **205** is intended to include a front-end for the coupling to an antenna **210**, an RF receiver or transceiver, filters, adapters, demodulators, impedance-matching circuits and in general all the circuit elements necessary for wirelessly communication at radio frequency with the transmitters of the sensor units **105-1, 105-2, 105-3** and **105-4.** The antenna **210 i**s for example an integrated, miniaturized, wide-band antenna, adapted to receive RF signal, in a relatively wide frequency range, for example from a few hundreds of MHz to some GHz, so as to allow the reception from sensor units of different type and/or produced by different manufacturers.

The RF section **205** is connected to an input of a Central Processing Unit (CPU) **215**; the connection of the RF section **205** to the CPU **215** may be mediated by an Analog-to-Digital Converter (ADC) **220,** adapted to convert analog data (for example, measures of tire pressure and/or temperature values) received from the sensor units **105-1, 105-2, 105-3** and **105-4** into digital form; alternatively, the RF section **205** may be connected to an ADC input of the CPU **215**. One or more buffers **225** may be provided to temporarily store the data received from the sensor units **105-1,105-2, 105-3** and **105-4** waiting to be provided to the CPU; this may be useful in case the rate at which the data are received from the sensor units exceeds the rate at which the CPU **215** can handle the received data.

For its operation, the CPU **215** exploits memory resources, including in particular, volatile (Read Only Memory - RAM) and non-volatile memory resources. The non-volatile memory resources may in particular include a non-volatile program memory (internal memory) **230**, preferably of programmable type, for storing data like a firmware of the receiver unit **115**, and a non-volatile data memory **235**, for example a Flash memory, an Electrically Erasable and Programmable Read Only memory (EEPROM) for the storage of the proprietary software protocol necessary to interpret data transmitted from the sensors, as described in greater detail lateron.

The CPU **215** is also connected, over a communication bus **240**, to a USB controller **245**, controlling the exchange of data through the USB connector **125**; the receiver unit **115** preferably includes one or more USB sockets **250**, connected to the bus **240** through a further USB controller **253**, allowing the connection of other USB peripheral devices (not shown in the drawing), e.g., "pen drives", MP3 music players, etc., to the USB interface of the vehicle's data processing system **140** also when the USB connector **125** of the receiving unit **115** is inserted into the vehicle's USB socket **130** (in other words, the receiving unit **115** is preferably also able to operate as a USB hub or bridge towards the vehicle's data processing unit).

A voltage adapter/regulator **255** is connected to the USB connector **125**, particularly to electric terminals thereof which, when the connector **125** is plugged into the socket **130**, receive the power supply from the USB connector **125**. The USB comprises four bus lines, namely a voltage supply line, a reference potential or ground voltage line, and a pairof differential-voltage data lines. The USB host device supplies, on the voltage supply line, a USB voltage of nominally 5 V +/- 0.25 V referred to the ground voltage line. The voltage adapter/regulator **255** receives the USB voltage and generates (possibly down-scaled, and/or boosted) regulated voltages suitable to supply the circuitry and components of the receiver unit **115**; a down-scaling of the USB voltage may be necessary when one or more of the integrated circuit components of the receiver unit **115** - like for example the CPU **215**, and/or the RF section **205** - require stabilized voltages of value different from the USB voltage. The regulated voltages are fed to a power management unit **260**, which is adapted to manage a power-on reset procedure of the receiver unit **115**, when it is powered after being plugged into a USB connector. The power management unit **260** is further adapted to manage power fail situations, when for example the receiver unit **115** is unplugged from a USB connector.

The receiver unit **115** may further include a user interface **265**, for the interaction with the user; the management interface may comprise one or more LEDs (Light Emitting Diodes) for visually signalling particular conditions, one or more pushbuttons for triggering particular operations, like for example pushbuttons for causing the receiver unit **115** communicate with communications infrastructures present on the roads, like pay-toll gates on highways, as will be described later on, or with other vehicles.

Optionally, the receiver unit **115** may include a memory card interface **270**, preferably a universal memory card interface, including a universal memory card socket and adapted to receive different types of memory cards like MMCs (Multimedia Cards), SD (Secure Digital) cards, CF (CompactFlash) cards, MS (MemoryStick) cards, SM (SmartMedia) cards and the like. A memory card reader **275** coupled to the memory card interface **270** and to the CPU **215** is adapted to allow the interaction between the CPU **215** and a memory card inserted into the memory card interface **270**.

Also, the receiver unit **115** may include biometric sensors, like for example a fingerprint sensor 280, for the detection of user's biometric parameters in order to identify the user.

The RF section may also include wireless communication interfaces different from that necessary for receiving data from the tires' sensor units, for example an IR {InfraRed) communication interface for the interaction with a remote control device (not shown in the drawing), and/or a Bluetooth interface, and/or a Wi-Fi and/or WiMax interface, for interacting with communications infrastructures external to the vehicle and installed on the roads, like for example pay-toll or control gates, or with other vehicles.

In **Figure 2** there is also schematically shown the structure of the vehicle's data processing system 140; essentially, it comprises a CPU **285**, exploiting memory resources **290** (RAM, ROM) for its operation, and the CPU **285**, through a bus **293**, is connected to a USB controller **295** associated with the USB socket **130**. The CPU **285** is coupled to the vehicle's display **145**, and it may also be coupled to the vehicle's stereo system and/or to other warning systems integrated in the vehicle (not shown in the drawing).

In operation, the data memory **235** of the receiver unit **115** is used to store software modules to be downloaded to a host data processing system like the vehicle's data processing system **140**. These software modules define the communication protocol to be used by the host data processing system for communicating with the receiver unit **115**, and/or the procedures for processing and interpreting the data provided by the tires' sensor units. In particular, the processing procedures may include safety margins settings for the tires' operating parameters, definition of anomalous conditions, proprietary or standard software protocol and algorithms necessary to interpret the data transmitted by the tires' sensor units and the like. The processing and/or interpreting procedures may also be adapted for displaying the detected conditions to the user on the vehicle's data processing system display.

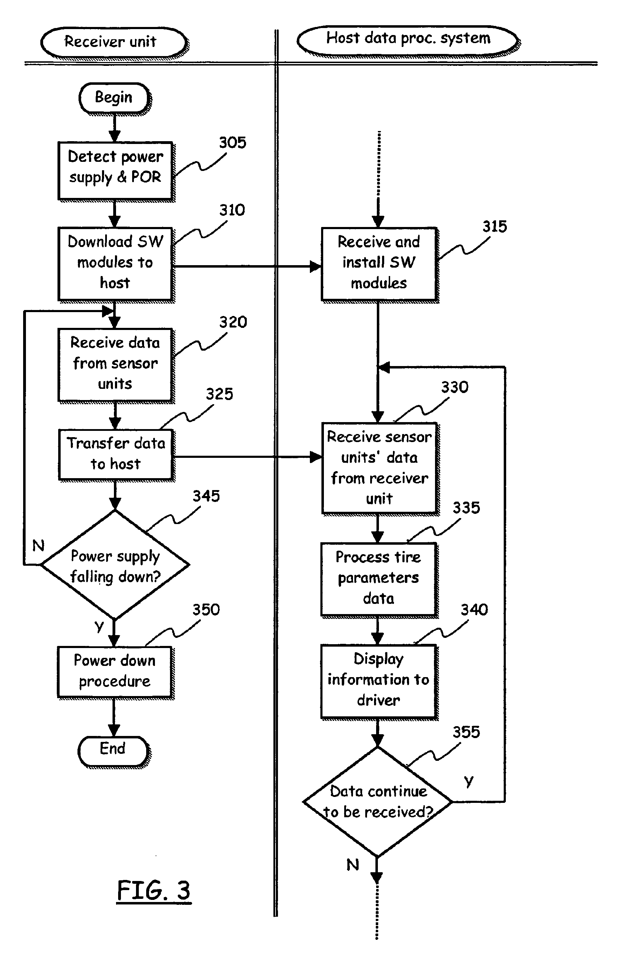

As schematically shown in the simplified action flow of **Figure 3**, once the receiver unit **115** is connected to the vehicle's data processing system **140** by plugging the USB connector **125** in the USB connection socket **130** present on the vehicle's dashboard **135**, the receiver unit **115** is powered by the USB voltage supplied *via* the vehicle's data processing system **140**; the power management unit **260** detects the presence of the USB voltage and triggers a Power-On Reset (POR) procedure of the receiver unit **115** (action **305**), which thus starts operating.

The CPU **215** causes the software modules stored in the data memory **235** to be uploaded to the vehicle's data processing system **140** (action **310**). This activity may possibly be subjected to, and triggered by, a deliberate command of the user, for example inputted through a pushbutton provided in the user interface **265** of the receiver unit **115**. The upload of the software modules stored in the data memory **235** to the vehicle's data processing system **140** may be triggered by the user, for example, by using pushbuttons, provided on the vehicle's dashboard, for on the steering wheel, external to receiver unit **115** (in the same way as in the case of a music file download from an MP3 music player plugged into the USB socket **130**). As soon as the proper-software modules to be downloaded are identified by the CPU **215** of the receiver unit **115**, a data communication link between the CPU **215** and the CPU **285** of the vehicle's data processing system **140** is established. The download of the software modules to the vehicle's data processing system **140** is then enabled by the user. When, after the receiver unit **115** is plugged in the USB socket **130**, the operating system of the vehicle's data processing system **140** may prompt on the vehicle's display **145** a label identifying the receiver unit **115** (as in a conventional "plug-and-play' procedure); at that time, the identification of the proper software modules to be uploaded to the vehicle's data processing system **140** is completed, and the vehicle's data processing system **140** is ready for the software download and installation.

The USB controller **245** of the receiver unit **115** supervises the process of upload of the software modules to the vehicle's data processing system over the USB.

The vehicle's data processing system **140** receives, stores and installs the downloaded software modules (action **315**); the vehicle's data processing system **140** now is ready to communicate with the receiver unit **115** using the proper communication protocol, in order to receive therefrom the raw data that are transmitted by the tires' sensor units, and to process and interpret them.

After this set-up phase, the receiver unit **115** listens for transmission from the tires'sensor units; when a sensor unit transmits information on sensed parameters, for example in the form of analog signals, the signals are received by the receiver unit **115** (action **320**). In particular, the signal are received by the antenna **210** and conveyed to the RF section **205**, which selects the frequency carrier. The RF section **205**, which includes an RF band-pass pre-filter and a low noise amplifier, defines the receiver band, amplifies the carrier signal and down-converts the frequency carrier to an Intermediate Frequency (IF) level (by means of a local oscillator). Having selected the desired signal, i.e. the signal from one of the sensor units **105-1,105-2,105-3** and **105-4**, among all the other signals in the air, demodulation is necessary to separate the information signal from the carrier. Hence, the signal is fed to a demodulator - of any possible kind and technology, for example, albeit not limitatively, Quadrature Mixer technique, PLL discriminator, Quadrature Frequency Discriminator, AM (Amplitude Modulation) envelope detector, AM coherent detector, etc. - and the resulting demodulated signal, containing the data related to the tire's operating parameters measured by the sensor unit, is converted into digital. The digitally-converted data, possibly buffered in the buffers **225**, are then transferred to the vehicle's data processing system **140** (action **325**). It is pointed out that, instead of analog signal modulation, a digital modulation technique may be employed (*e.g*. Amplitude Shift Keying - ASK -, Frequency Shift Keying -FSK -, Phase Shift Keying - PSK -, Differential PSK, M-ary FSK, Quadrature PSK - QPSK -, Offset QPSK, π/4 QPSK, Quadrature Amplitude Modulation - QAM -, etc.)

The vehicle's data processing system **140** receives the data from the receiver unit **115** (action **330**). The vehicle's data processing system **140** then processes the received data (action **335**), and, if necessary, displays information to the vehicle driver, *e.g*. on the vehicle's display device **135** (action **340**). Processing the data received from the receiver unit **115** may for example involve interpreting the received data to derive tires' pressure and/or temperature values, and/or other tires' operating parameters, displaying the current tires' pressure and/or temperature values on the vehicle's display device **145**, comparing the current tires' pressure and/or temperature values with predetermined threshold values, and issuing visual and/or audio alerts to the vehicle driver in case the current values fall outside predetermined safety margins. The complexity of the data processing may depend on the nature of the tires' operating parameters.

As long as data are received from the receiver unit **115**, the vehicle's data processing system **140** continues to process them; when no more data are received, the data processing stops (action **355**, exit branch **N**).

These actions are repeated essentially until the receiver unit **115** is kept plugged into the USB socket **130**; when the receiver unit **115** is unplugged from the USB socket **130**, the power management unit **260** detects a power supply failure, and starts a power-down procedure (actions **345**, exit branch **Y**, and **350**).

Where provided, visual indicators (LEDs) of the user interface **265** of the receiver unit **115** may be exploited to provide visual alerts to the vehicle's driver, in addition or in alternative to the indications provided by the vehicle's data processing system **140** on the vehicle's display device **145** or through the vehicle's stereo system, like for example alarms for abnormal operating conditions of the tires, and/or the absence of a communication link with one or more of the tires' sensor units (which may for example be due to the discharge of the sensor units' battery, or to a failure thereof).

Thanks to the fact that the receiver unit **115** is also capable of operating as a USB hub or bridge, while the receiver unit **115** is plugged into the vehicle's USB socket 130, the user may plug into the USB socket **250** of the receiver unit **115** other USB peripheral devices, like for example an MP3 reader. The receiver unit's CPU **215**, through the USB controllers **245** and **253**, manages the transparent flow of data from the vehicle's data processing system **140** to the USB peripheral device plugged into the USB socket **250**. The CPU **215** similarly manages congestion avoidance policies, adapted to avoid possible congestion of the bus **240** which is shared for transferring tire sensor units' data from the receiver unit **115** to the vehicle's data processing system **140**, and for the exchange of data between the vehicle's data processing system **140** and the USB peripheral device plugged into the USB socket **250**.

The receiver unit **115** may store, in the data memory **235**, two or more software packages, organized for example in a software repository, specific for different types of sensor units that may be installed on the vehicle's tires. The receiver unit **115** may for example be adapted to identify the type of sensor units that are installed on the vehicle's tires, based on the data received therefrom, and to select in the software repository the appropriate software package to be downloaded to the vehicle's data processing system **140**. Another possibility could be that the vehicle's display **145** prompts to the user a list of the software packages available in the (data memory **235** of the) receiver unit **115**: the user, *e.g*. the vehicle's driver, knowing the sensor units manufacturer name, will select the most appropriate software package (in the same way as when he/she selects a music file to be downloaded from an MP3 music player plugged into the USB socket **130**). It is also possible that the receiver unit **115** inquiries the sensor units **105-1, 105-2, 105-3** and **105-4** to obtain therefrom an indication of the sensors' type.

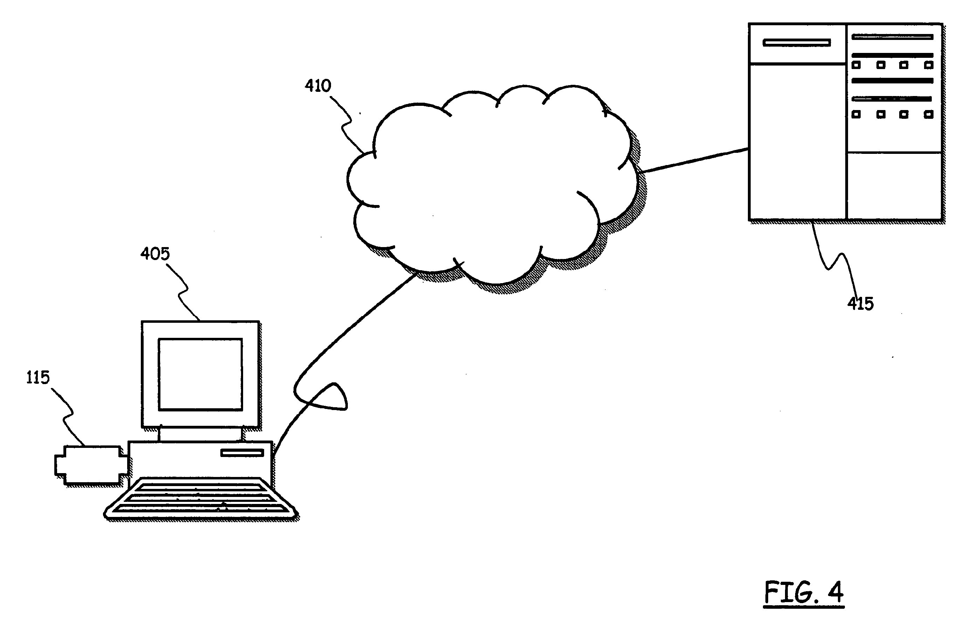

The software to be downloaded to the vehicle's data processing system **140** may be preloaded in the receiver unit **115** by the manufacturer. The software in the repository (data memory **235**) of the receiver unit **115** may be upgraded and/or enriched with new software packages by downloading new software releases, or additional software packages for new types of sensor units, stored on a memory card, by inserting it into the memory card interface **270** of the receiver unit **115**. As pictorially shown in **Figure 4**, the software repository of the receiver unit **115** may also be upgraded and/or enriched by downloading new software releases, or additional software packages for new types of sensor units, for example from a PC **405**, to which the receiver unit can be connected through a PC USB port. The PC **405** may be connected to a data network **410**, such as the Internet, and be capable of downloading the software packages for the receiver unit **115** from a server **415**, for example of the manufacturer of the TMPS. The upgrade of the software repository of the receiver unit **115** may be conditioned to a specific command by the user, for example entered through one or more of the pushbuttons of the receiver unit **115**; an interrupt service routine of the receiver unit **115** firmware will thus be started by the CPU **215**, to accomplish the operations necessary for the downloading and storing in the data memory **235** of the new software. In a similar way, also the firmware of the receiver unit **115** may be upgraded, downloading an upgraded firmware version and storing it into the internal memory **230**.

The provision on the receiver unit **115** of input devices like biometric sensors, such as the fingerprint sensor **280**, allows the receiver unit **115** to retrieve, for example from its internal memory **230**, user-related settings (for example, specific settings for the vehicle's drive parameters, related to the preferences or drive habits of the vehicle's habitual driver or of the vehicle's owner), previously stored in the receiver unit **115**. These user-specific data may as well be transferred to the vehicle's data processing system **140**, which can thus adapt its functions (for example, the safety margins for the tires' operating parameters may be tuned according to the driving style of the driver); moreover it could be envisaged that the vehicle's data processing system **140** can cause (by interacting with an active suspension system of the vehicle) the proper, customized set up the vehicle' suspensions according to the driving style of the driver.

Exploiting wireless communication interfaces included in the RF section **205**, like a Wi-Fi or a Wimax interface, the receiver unit **115** may be able to transmit data related to the tires' conditions, as well as to interact with communication network infrastructures deployed along the roads, for example the motorways. For example, this functionality may be exploited to communicate to a toll payment system of a motorway managing company the number of axes of the vehicle, in order to allow the toll payment system establish the proper toll. Also, parameters like the condition of the road (wet, dry, presence of ice or snow, etc.) might be communicated to other, following vehicles to allow drivers adapt their driving conduct in advance.

The receiver unit according to the described invention embodiments does not pose problems of installation on the vehicles, because it can be relatively small in size, thanks to the fact that it does not need to be equipped with display devices and man/machine interfaces, apart from possible LEDs and a few pushbuttons. The receiver unit does not need any specific wiring for the connection to the vehicle's electrical system, because it is directly supplied through the USB socket **130**.

Thanks to the fact that the tasks that the receiver unit according to the described invention embodiments has to perform are relatively limited, it can have limited processing power, and thus its power consumption may be relatively low. Thus, the receiver unit may be battery operated, through an internal battery, and it may even be totally passive, provided that the standard interface provided on the vehicle is of a type supplying power to peripheral devices connected thereto.

Exploiting the vehicle's data processing system as a host for performing the heavier tasks from the processing viewpoint and the visual/audio display devices already integrated in the vehicle allows simplifying the structure of the receiver unit, reducing its power consumption, and avoids that the impact of the TMPS receiver unit on the aesthetic of the vehicle cabin.

The present invention has been here described considering some possible embodiments thereof. Those skilled in the art will readily recognize that several modifications to the described embodiments are possible, as well as other embodiments, all falling within the scope of the appended claims.

For example, although described in connection with tires' sensors, the present invention may be more generally applicable to other types of vehicles' sensors systems, associated with other vehicles' components.

## Claims

1. A device (115) comprising:
- a wireless receiver unit (205) adapted to receive signals from at least one sensor (**115-1,...,115-4**) mounted on a vehicle, wherein the signals received from the at least one sensor carry data related to operating parameters of at least one vehicle's component (**110**), detected by the at least one sensor;
**characterized by** comprising:
- an interface (**125,245**) adapted to the coupling of the device to a peripherals connection port (**130**) of a vehicle's data processing system (**140**) integrated in the vehicle, said peripheral connection port being accessible to users within the vehicle's cabin for the connection of peripheral type electronic devices;
and wherein the device, when coupled to the peripherals connection port of the vehicle's data processing system, is operable to transfer thereto the data related to vehicle's operating parameters detected by the at least one sensor, and to enable the vehicle's data processing system to processing the transferred data for the interpretation of the operating parameters: and
a repository (235) of at least one software package adapted to be installed on and executed by the vehicle's data processing system for said processing of the data related to vehicle's operating parameters detected by the at least one sensor, wherein the device is adapted to upload said at least one software package to the vehicle's data processing system when coupled to the peripherals connection port thereof.

2. The device of claim 1, comprising a power supply unit (**255**) adapted to exploit a power supply provided by the vehicle's data processing system through said peripherals connection port thereof for generating a power supply for the operation of the device.

3. The device of claim 1, wherein said repository is adapted to store a library of software packages adapted to be installed on and executed by the vehicle's data processing system for said processing of the data related to vehicle's operating parameters detected by the at least one sensor, each software package of said library corresponding to a respective type of sensor.

4. The device of claim 3, comprising a processing unit **(215)** adapted to identify in said library a software package corresponding to a specific type of sensor mounted on the vehicle, and to upload to the vehicle's data processing system the identified software package.

5. The device of claim 1, 3 or 4, comprising a processing unit (**215**) adapted to download said at least one software package from a software package storage (**405;415**) and to store it in said repository.

6. The device of claim 5, wherein said software package storage includes a memory card, and wherein the device comprises a memory card connection interface (270,275) adapted to the plugging of the memory card wherein said at least one software package to be downloaded is stored.

7. The device of claim 5 or 6, wherein said processing unit is adapted to download said at least one software package from said software package storage **(405)** by connection of said interface to a peripheral connection port of the software package storage.

8. The device of any one of the preceding claims, further comprising a connection interface (250,253) having a peripherals connection port **(250)** replicating the peripherals connection port of the vehicle's data processing system, and wherein the device, when coupled to the peripherals connection port of the vehicle's data processing system, is adapted to operate as a bridge between a peripheral device connected to said connection port of the connection interface and the vehicle's data processing system.

9. The device of any one of the preceding claims, wherein said interface includes a USB interface or a Firewire interface adapted to the coupling of the device to a USB port or a Firewire port of the vehicle's data processing system.

10. The device of any one of the preceding claims, wherein said at least one sensor includes a tire's operating parameters sensor associated with at least one of the vehicle's tires.

11. The device of claim 10, wherein said data related to vehicle's operating parameters detected by the at least one sensor include one or more among a tire's inflating pressure, a tire's temperature, a tire's number of revolutions, a tire's friction coefficient, exerted forces at a tire-road interface, a tire's contact patch area length, a tire's slip angle, tire's aquaplaning conditions, road conditions and tire's tread band wear.

12. A vehicle's components operating conditions monitoring system comprising:
- at least one sensor unit **(115-1,...,115-4)** adapted to be associated with a vehicle's component, the at least one sensor unit comprising at least one sensor adapted to detect vehicle's component operating parameters, and a wireless transmitter adapted to wirelessly transmit signals carrying data related to the vehicle's component operating parameters detected by the at least one sensor,
- a wireless receiver unit (**205**) adapted to receive said signals from the at least one sensor unit, wherein said wireless receiver unit is realized according to any one of claims 1 to 11.

## Patentansprüche

1. Gerät (115), umfassend:
eine drahtlose Empfangseinheit (205), die eingerichtet ist, um Signale von mindestens einem Sensor (115-1, ..., 115-4), der an einem Fahrzeug angebracht ist, zu empfangen, wobei die Signale, die von dem mindestens einen Sensor empfangen werden, Daten bezüglich eines Betriebsparametern mindestens einer Fahrzeugkomponente (110) tragen, die durch den mindestens einen Sensor erfasst wurden;
**gekennzeichnet durch** umfassend:
- eine Schnittstelle (125, 245), die für die Kopplung des Geräts zu einem Peripherie-Verbindungsport (130) eines Datenverarbeitungssystems des Fahrzeuges (140), das in dem Fahrzeug integriert ist, gerichtet ist, wobei der Peripherie-Verbindungsport zu Benutzern innerhalb der Fahrzeugkabine zugänglich ist für die Verbindung von elektronischen Geräten eines peripheren Typs;
und wobei das Gerät, wenn es zu dem Peripherie-Verbindungsport des Datenverarbeitungssystems des Fahrzeuges verbunden wird, betreibbar ist, um Daten bezüglich Betriebsparameter des Fahrzeuges, die **durch** den mindestens einen Sensor erfasst wurden, hierzu zu übertragen, und um es dem Datenverarbeitungssystem des Fahrzeuges zu ermöglichen, die übertragenen Daten für die Interpretation der Betriebsparameter zu verarbeiten, und ein Speicherort (235) mindestens eines Software-Pakets, das eingerichtet ist, um installiert zu werden auf und ausgeführt zu werden **durch** das Datenverarbeitungssystem des Fahrzeuges für die Verarbeitung der Daten bezüglich Betriebsparameter des Fahrzeuges, die **durch** den mindestens einen Sensor erfasst wurden, wobei das Gerät eingerichtet ist, um das mindestens eine Software-Paket zu dem Datenverarbeitungssystem des Fahrzeuges hochzuladen, wenn es zu dem Peripherie-Verbindungsport davon verbunden wird.

2. Gerät nach Anspruch 1, umfassend eine Energieversorgungseinheit (255), die eingerichtet ist, um eine Energieversorgung, die durch das Datenverarbeitungssystem des Fahrzeuges bereitgestellt wird, zu nutzen, durch den Peripherie-Verbindungsport hiervon zum Erzeugen einer Energieversorgung für den Betrieb des Geräts.

3. Gerät nach Anspruch 1, wobei der Speicherort eingerichtet ist, um eine Bibliothek von Software-Paketen zu speichern, die eingerichtet ist, um installiert zu werden auf und ausgeführt zu werden durch das Datenverarbeitungssystem des Fahrzeuges für die Verarbeitung der Daten bezüglich Betriebsparametern des Fahrzeuges, die durch den mindestens einen Sensor erfasst wurden, wobei jedes Software-Paket der Bibliothek einem jeweiligen Sensortyp entspricht.

4. Gerät nach Anspruch 3, umfassend eine Verarbeitungseinheit 215), die eingerichtet ist, um in der Bibliothek ein Software-Paket zu identifizieren, das einem spezifischen Sensortyp, der in dem Fahrzeug angebracht ist, entspricht, und das identifizierte Software-Paket zu dem Datenverarbeitungssystem des Fahrzeuges hochzuladen.

5. Gerät nach Anspruch 1, 3 oder 5, umfassend eine Verarbeitungseinheit (215), die eingerichtet ist, um das mindestens eine Software-Paket von einem Software-Paketspeicher (405; 415) herunterzuladen und es in dem Speicherort zu speichern.

6. Gerät nach Anspruch 5, wobei der Software-Paketspeicher eine Speicherkarte beinhaltet, und wobei das Gerät eine Speicherkarten-Verbindungsschnittstelle (270, 275) umfasst, die eingerichtet ist für das Anschließen der Speicherkarte worin das mindestens eine Software-Paket, das herunterzuladen ist, gespeichert ist.

7. Gerät nach Anspruch 5 oder 6, wobei die Verarbeitungseinheit eingerichtet ist, um das mindestens eine Softwarepaket von dem Software-Paketspeicher (405) herunterzuladen durch Verbinden der Schnittstelle zu einem Peripherie-Verbindungsport des Software-Paketspeichers.

8. Gerät nach einem der vorangegangenen Ansprüche, ferner umfassend eine Verbindungsschnittstelle (250, 253) mit einem Peripherie-Verbindungsport (250), der den Peripherie-Verbindungsport des Datenverarbeitungssystems des Fahrzeugs reproduziert, und wobei das Gerät, wenn es zu dem Peripherie-Verbindungsport des Datenverarbeitungssystems des Fahrzeugs verbunden wird, eingerichtet ist, um als eine Brücke zwischen einem peripheren Gerät, das zu dem Verbindungsport der Verbindungsschnittstelle verbunden ist, und dem Datenverarbeitungssystem des Fahrzeuges zu operieren.

9. Gerät nach einem der vorangegangenen Ansprüche, wobei die Schnittstelle eine USB-Schnittstelle oder eine Firewire-Schnittstelle umfasst, die eingerichtet ist für die Kopplung des Geräts zu einem USB-Port oder einem Firewire-Port des Datenverarbeitungssystems des Fahrzeugs.

10. Gerät nach einem der vorangegangenen Ansprüche, wobei der mindestens eine Sensor einen Betriebsparametersensor eines Reifens beinhaltet, der mit mindestens einem der Reifen des Fahrzeuges assoziiert ist.

11. Gerät nach Anspruch 10, wobei die Daten bezüglich Betriebsparameter des Fahrzeuges, die durch den mindestens einen Sensor erfasst werden, Einhalten eines oder mehrere von einem Reifenfülldruck, einer Reifentemperatur, einer Reifenumdrehungszahl, eines Reifenreibungskoeffizienten, ausgeübte Kräfte an einer Reifenstraßenschnittstelle, einer Reifenkontaktstellenbereichslänge, einem Reifenschlupfwinkel, Reifen-Aquaplaning-Zuständen, Straßenzuständen und Reifenlaufflächenabnutzung.

12. Fahrzeugkomponenten-Betriebszustands-Überwachungssystem, umfassend:
- mindestens eine Sensoreinheit (115-1, ..., 115-4), die eingerichtet ist, um mit einer Fahrzeugkomponente assoziiert zu sein, wobei die mindestens eine Sensoreinheit mindestens einen Sensor umfasst, der eingerichtet ist, um Fahrzeugkomponenten-Betriebsparameter zu erfassen, und einen Drahtlos-Übertrager, der eingerichtet ist, um Signale drahtlos zu übertragen, die Daten bezüglich der Fahrzeugkomponenten-Betriebsparameter, die durch den mindestens einen Sensor erfasst werden, tragen;
- eine Drahtlos-Empfangseinheit (205), die eingerichtet ist, um die Signale von der mindestens einen Sensoreinheit zu empfangen, wobei die Drahtlos-Empfängereinheit realisiert ist nach einem der Ansprüche 1 bis 11.

## Revendications

1. Dispositif (115) comprenant:
- un récepteur sans fil (205) agencé pour recevoir des signaux d'au moins un capteur (115-1, ..., 115-4) monté sur un véhicule, dans lequel les signaux reçus de l'au moins un capteur transportent des données relatives aux paramètres de fonctionnement d'au moins un composant du véhicule (110), détecté par l'au moins un capteur ;
**caractérisé en ce qu'**il comprend :
- une interface (125, 145) agencée pour le couplage du dispositif à un port de connexion de périphériques (130) d'un système de traitement de données du véhicule (140) intégré dans le véhicule, ledit port de connexion de périphérique étant accessible aux utilisateurs au sein de la cabine du véhicule pour la connexion de dispositifs électroniques de type périphérique ;
et dans lequel le dispositif, lorsqu'il est associé au port de connexion de périphériques du système de traitement de données du véhicule, peut être utilisé pour transférer les données relatives aux paramètres de fonctionnement du véhicule détectés par l'au moins un capteur, et de permettre au système de traitement de données du véhicule de traiter les données transférées pour l'interprétation des paramètres de fonctionnement, et
un support (235) pour au moins un ensemble logiciel adapté pour être installé dans et exécuté par le système de traitement de données du véhicule pour ledit traitement des données relatives aux paramètres de fonctionnement du véhicule détectés par l'au moins un capteur, dans lequel le dispositif est agencé pour transmettre ledit au moins un ensemble logiciel au système de traitement de données du véhicule lorsqu'il est associé au port de connexion de périphériques de celui-ci.

2. Dispositif selon la revendication 1, comprenant un bloc d'alimentation (255) agencé pour utiliser une alimentation électrique fournie par le système de traitement de données du véhicule à travers ledit port de connexion de périphériques de celui-ci pour générer une alimentation électrique pour le fonctionnement du dispositif.

3. Dispositif selon la revendication 1, dans lequel ledit support est agencé pour mémoriser une bibliothèque d'ensembles logiciels susceptibles d'être installés sur et exécutés par le système de traitement de données du véhicule pour ledit traitement de données relatives aux paramètres de fonctionnement du véhicule détectées par l'au moins un capteur, chaque ensemble logiciel de ladite bibliothèque correspondant à un type de capteur respectif.

4. Dispositif selon la revendication 3, comprenant une unité de traitement (215) agencée pour identifier dans ladite banque un ensemble logiciel correspondant à un type spécifique de capteur monté sur le véhicule, et de transmettre vers le système de traitement des données du véhicule l'ensemble logiciel identifié.

5. Dispositif selon la revendication 1, 3, ou 4, comprenant une unité de traitement (215) agencée pour télécharger ledit au moins un ensemble logiciel depuis une mémoire d'ensemble logiciel (405, 415) et pour le mémoriser sur ledit support.

6. Dispositif selon la revendication 5, dans lequel ladite mémoire d'ensemble logiciel comprend une carte mémoire, et dans lequel le dispositif comporte une interface de connexion de carte mémoire (270, 275) agencée pour le branchement de la carte mémoire dans laquelle ledit au moins un ensemble logiciel à télécharger est mémorisé.

7. Dispositif selon la revendication 5 ou 6, dans lequel ladite unité de traitement est agencée pour télécharger ledit au moins un ensemble logiciel depuis ladite mémoire d'ensemble logiciel (405) par connexion de ladite interface à un port de connexion de périphériques de la mémoire d'ensemble logiciel.

8. Dispositif selon l'une quelconque des revendications précédentes, comprenant en outre une interface de connexion (250, 253) ayant un port de connexion de périphériques (250) répliquant le port de connexion de périphériques du système de traitement de données du véhicule, et dans lequel le dispositif, lorsqu'il est associé au port de connexion de périphériques du système de traitement de données du véhicule, est agencé pour fonctionner comme une passerelle entre un dispositif périphérique connecté au dit port de connexion de l'interface de connexion et le système de traitement de données du véhicule.

9. Dispositif selon l'une quelconque des revendications précédentes, dans lequel ladite interface comporte une interface USB ou une interface Firewire agencée pour l'association du dispositif à un port USB ou un port Firewire du système de traitement de données du véhicule.

10. Dispositif selon l'une quelconque des revendications précédentes, dans lequel ledit au moins un capteur comprend un capteur de paramètres de fonctionnement du pneu associé à au moins un des pneus du véhicule.

11. Dispositif selon la revendication 10, dans lequel lesdites données relatives aux paramètres de fonctionnement du véhicule détectés par l'au moins un capteur comporte un ou plusieurs paramètres parmi : une pression de gonflage du pneu, une température du pneu, un nombre de tours du pneu, un coefficient de frottement du pneu, des forces exercées à une interface pneu-chaussée, une longueur de surface de contact du pneu, un angle de glissement du pneu, des conditions d'aquaplaning du pneu, des conditions routières et usure de la bande de roulement du pneu.

12. Un système de surveillance des conditions de fonctionnement de composants d'un véhicule comprenant:
- au moins une unité capteur (115-1, ... , 115-4) agencée pour être associée avec un composant du véhicule, l'au moins une unité capteur comprenant au moins un capteur adapté pour détecter des paramètres de fonctionnement d'un composant du véhicule, et un émetteur sans fil adapté à transmettre sans fil des signaux transportant des données relatives aux paramètres de fonctionnement du composant du véhicule détectés par l'au moins un capteur ;
- un récepteur sans fil (205) adapté pour recevoir lesdits signaux depuis l'au moins une unité capteur, dans lequel ledit récepteur sans fil est réalisé selon l'une quelconque des revendications 1 à 11.
